(19) Europäisches Patentamt / European Patent Office / Office européen des brevets

(11) **EP 2 728 321 B1**

(12) **FASCICULE DE BREVET EUROPEEN**

(45) Date de publication et mention de la délivrance du brevet:
**26.11.2014 Bulletin 2014/48**

(51) Int Cl.:
***G01H 3/00*** *(2006.01)*

(21) Numéro de dépôt: **13005119.6**

(22) Date de dépôt: **28.10.2013**

(54) **Procédé de surveillance de capteurs vibratoires**

Überwachungsverfahren für Schwingungssensoren

Method for monitoring vibration sensors

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.10.2012 FR 1202918**

(43) Date de publication de la demande:
**07.05.2014 Bulletin 2014/19**

(73) Titulaire: **Airbus Helicopters**
**13725 Marignane Cedex (FR)**

(72) Inventeurs:
- **Girondin, Victor**
  **13100 Aix-en-Provence (FR)**
- **Pekpe, Komi Midzodzi**
  **59520 Marquette-Lez-Lille (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
- **Frédéric Kratz: "Utilisation des techniques de redondances matérielless et analytiques à la détection de pannes de capteurs - Application aux centrales nucléaires", Thèse de doctorat, 24 juin 1991 (1991-06-24), XP055084667, Extrait de l'Internet: URL:http://docnum.univlorraine.fr/public/ SCD_T_1991_0072_KRATZ.pdf [extrait le 2013-10-21]**
- **KEVIN C . DALY ET AL: "Generalized Likelihood Test for FDI in Redundant Sensor Configurations", JOURNAL OF GUIDANCE, CONTROL, AND DYNAMICS, vol. 2, no. 1, 1 janvier 1979 (1979-01-01) , pages 9-17, XP055084669, ISSN: 0731-5090, DOI: 10.2514/3.55825**
- **JAMES C DECKERT ET AL: "F-8 DFBW Sensor Failure Identification Using Analytic Redundancy", IEEE TRANSACTIONS ON AUTOMATIC CONTROL, vol. 6, 1 octobre 1977 (1977-10-01), pages 795-803, XP055084677,**
- **KRISHNA R PATTIPATI ET AL: "A design methodology for robust failure detection and isolation", 19840601, 1 juin 1984 (1984-06-01), pages 1755-1762, XP031104912,**
- **VICTOR GIRONDIN ET AL: "Vibration-Based Fault Detection of Accelerometers in Helicopters", 8TH IFAC SYMPOSIUM ON FAULT DETECTION, SUPERVISION AND SAFETY OF TECHNICAL PROCESSES, 29 août 2012 (2012-08-29), pages 720-725, XP055084680, ISSN: 1474-6670, DOI: 10.3182/20120829-3-MX-2028.00049 ISBN: 978-3-90-282309-0**
- **Olivier Adrot: "Diagnostic à base de modèles incertains utilisant l'analyse par intervalles : l'approche bornante", Thèse de doctorat, 4 décembre 2000 (2000-12-04), XP055084722, Extrait de l'Internet: URL:http:// perso.ensem.inpl-nancy.fr/Jose. Ragot/These_ Adrot.pdf [extrait le 2013-10-21]**

**Description**

La présente invention se situe dans le domaine des procédés de surveillance des moyens de contrôle, tels des capteurs vibratoires. L'invention concerne plus particulièrement un procédé de détection de défauts de capteurs vibratoires.

Les capteurs vibratoires sont utilisés dans de nombreux systèmes mécaniques afin de mesurer les signaux vibratoires émis ou bien subis par ces systèmes mécaniques. Notamment, dans le cas de machines tournantes telles qu'une turbine à gaz ainsi que dans le cas d'un véhicule complet équipé de telles machines tournantes, un aéronef à voilure tournante par exemple, de nombreuses sources vibratoires existent.

Bien évidemment, l'invention s'applique à tout système soumis à des vibrations, par exemple des véhicules ou bien des machines outils.

Les capteurs vibratoires, tels des accéléromètres ou des microphones, sont généralement installés sur ces systèmes afin de surveiller leur fonctionnement, en mesurant ces signaux vibratoires et d'en déduire ensuite une ou plusieurs informations sur leur fonctionnement, telles que l'amplitude, la phase ou l'impulsivité. Il est également possible de réaliser un diagnostic sur le fonctionnement de chaque système mécanique afin de déceler, voire d'anticiper une panne, en comparant par exemple, chaque mesure à des mesures caractéristiques des différentes pannes possibles ou bien en analysant l'évolution des signaux vibratoires mesurés par les capteurs de vibrations au cours du fonctionnement de ce système.

Cependant, pour que ces mesures vibratoires et, par suite, la surveillance des systèmes soient fiables, on doit s'assurer du bon fonctionnement de chaque capteur vibratoire. En effet, un capteur vibratoire en panne peut ne pas fournir d'information sur le signal vibratoire mesuré. Ce type de panne est facilement identifiable, aucune surveillance du système étant alors assurée par ce capteur vibratoire. Par contre, un capteur vibratoire en panne peut fournir une mesure erronée du signal vibratoire mesuré, la surveillance du système étant alors inefficace. Il peut par exemple entrainer la détection d'une panne inexistence et engendrer des coûts de maintenance inutiles ou bien ne pas détecter une panne réelle et les conséquences peuvent alors être beaucoup plus importantes.

Il est donc important de surveiller régulièrement l'état de fonctionnement de chaque capteur vibratoire afin de surveiller efficacement le fonctionnement du système.

Il est connu par exemple de démonter chaque capteur vibratoire à tester et de le soumettre à une sollicitation connue générée par un dispositif indépendant du système mécanique. La mesure de chaque capteur vibratoire est ensuite comparée à une réponse nominale qui permet de conclure sur l'état de fonctionnement du capteur vibratoire. Il s'agit d'une intervention manuelle d'un technicien, qui immobilise donc le capteur vibratoire et le système pendant le temps de cette intervention.

Il est également possible pour un technicien de tester directement chaque capteur vibratoire pour vérifier d'une part si le capteur est en court-circuit et d'autre part s'il consomme de l'énergie. Par contre, ce dernier test ne permet pas toujours de déceler la fourniture d'un signal erroné par le capteur vibratoire.

On connait le document US 2009/0284263 qui décrit un test électronique de chaque capteur vibratoire effectué directement sur le système mécanique, sans démontage. Un signal électrique connu et contrôlé est envoyé à chaque capteur vibratoire via le circuit électrique existant et la réponse de chaque capteur vibratoire est ensuite analysée. Ce test ne nécessite ni démontage, ni intervention d'un technicien et peut être réalisé pendant le fonctionnement du système mécanique. Cependant, ce test requiert un nouveau moyen électronique de surveillance intégré au système mécanique pour l'émission du signal électrique connu et contrôlé ainsi que pour l'analyse de la réponse de chaque capteur vibratoire. Ce nouveau moyen électronique de surveillance intégré a alors un coût qui peut être d'autant plus important que le nombre de capteurs vibratoires présents dans le système est important et le bon fonctionnement de ce nouveau moyen électronique de surveillance doit également être surveillé.

Les inconvénients de ces différentes méthodes de surveillance des capteurs vibratoires sont qu'elles nécessitent soit une action de maintenance, c'est-à-dire l'arrêt du système mécanique, voire le démontage des capteurs vibratoires à vérifier, et l'intervention de techniciens, soit l'utilisation d'un moyen de surveillance supplémentaire et spécifique.

Par ailleurs, le document de G. Bienvenu « Influence de la cohérence spatiale du bruit de fond sur la résolution de sources ponctuelles» du Colloque national sur le traitement du signal et ses applications, Nice, du 26 au 30 avril 1977, décrit notamment l'influence que peuvent avoir les bruits de fond et notamment leur cohérence spatiale pour la détection d'erreurs sur les mesures de signaux impactés par ces bruits.

De plus, le document de thèse de Olivier Adrot de décembre 2000 intitulé « Diagnostic à base de modèles incertains utilisant l'analyse par intervalles : l'approche bornante » analyse une méthode de diagnostic, appelée approche bornante, qui est une stratégie ensembliste reposant sur l'analyse par intervalles. Elle tient compte de manière globale de la structure et de l'amplitude des incertitudes, permettant ainsi de conserver plus d'informations que les techniques fonctionnant par découplage.

Enfin, le document de thèse de S.Ainouz d'octobre 2006 intitulé « Analyse et traitement d'images multidimensionnelles de polarisation » a pour objet la recherche d'une représentation algébrique appliquée en particulier au traitement d'images et de façon plus générale à l'action de tout système linéaire. Notamment, ce document décrit le calcul d'erreurs sur des mesures et le filtrage du bruit des images en utilisant des quaternions.

On connait aussi le document de Frédéric Kratz: "Utilisation des techniques de redondances matérielles et analytiques à la détection de pannes de capteurs - Application aux centrales nucléaires", Thèse de doctorat, 24 juin 1991 (1991-06-24), XP055084667, Extrait de l'Internet: URL:http://docnum.univlorraine.fr/public/SCD_T_1991_0072_KRATZ.pdf

On connait aussi le document de KEVIN C . DALY ET AL: "Generalized Likelihood Test for FDI in Redundant Sensor Configurations", JOURNAL OF GUIDANCE, CONTROL, AND DYNAMICS, vol. 2, no. 1, 1 janvier 1979 (1979-01-01), XP055084669

On connait aussi le document de JAMES C DECKERT ET AL: "F-8 DFBW Sensor Failure Identification Using Analytic Redundancy", IEEE TRANSACTIONS ON AUTOMATIC CONTROL, vol. 6, 1 octobre 1977 (1977-10-01), XP055084677.

On connait aussi le document de KRISHNA R PATTIPATI ET AL: "A design methodology for robust failure détection and isolation", 1 juin 1984 (1984-06-01)

On connait aussi le document de VICTOR GIRONDIN ET AL: "Vibration-Based Fault Detection of Accelerometers in Helicopters", 8TH IFAC SYMPOSIUM ON FAULT DETECTION, SUPERVISION AND SAFETY OF TECHNICAL PROCESSES, 29 août 2012 (2012-08-29), XP055084680.

La présente invention a alors pour objet de proposer un procédé de surveillance des capteurs vibratoires d'un système, ce procédé permettant de pallier les inconvénients mentionnés précédemment afin de surveiller de façon fiable et économique le fonctionnement de ces capteurs vibratoires.

Ces capteurs vibratoires sont installés sur un système, qui peut être par exemple une machine tournante telle une turbine à gaz ou bien un véhicule tel un aéronef à voilure tournante. Chaque système émet ou transmet au moins un signal vibratoire $S_i$ et comporte au moins deux capteurs vibratoires.

Selon l'invention, un tel procédé de surveillance des capteurs vibratoires comporte quatre étapes principales.

Tout d'abord, lors d'une étape préliminaire, on définit au moins un groupe $G_i$ comportant au moins deux capteurs vibratoires recevant un signal vibratoire $S_i$ à une fréquence caractéristique $f_i$, ce signal vibratoire $S_i$ suivant des chemins de propagation équivalents jusqu'à ces capteurs vibratoires.

Puis, lors d'une étape d'acquisition, on réalise une acquisition synchrone du signal vibratoire $S_i$ reçu par chaque capteur vibratoire de chaque groupe $G_i$, puis on détermine à partir de cette acquisition synchrone un spectre du signal vibratoire $S_i$ reçu par chaque capteur vibratoire. Ensuite, on calcule pour chaque couple de capteurs vibratoires de ce groupe $G_i$ un coefficient de cohérence spectrale des spectres du signal vibratoire reçu par ce couple de capteurs vibratoires et on construit une matrice de cohérence $C_i$ de chaque groupe $G_i$.

Ensuite, lors d'une étape d'analyse, on détermine les valeurs propres $\lambda n_i$ et les vecteurs propres $Vn_i$ associés de cette matrice de cohérence $C_i$ du groupe $G_i$, on trie les valeurs propres $\lambda n_i$ par ordre croissant de leur valeur absolue, on calcule le rang de cette matrice de cohérence $C_i$, puis on en déduit le nombre de capteurs vibratoires probablement défectueux pour chaque groupe $G_i$ et on identifie ces capteurs vibratoires probablement défectueux.

Enfin, lors d'une étape de diagnostic, on compile les analyses de chaque groupe $G_i$ afin de confirmer les capteurs vibratoires considérés comme défectueux au sein du système.

Avantageusement, le procédé selon l'invention utilise des signaux vibratoires déjà existants au sein du système contenant les capteurs vibratoires à surveiller. Ces signaux vibratoires peuvent être émis par différentes sources vibratoires, par exemple un élément tournant au sein du système ou bien un moteur thermique qu'il contient ainsi qu'une source extérieure au système, le signal vibratoire de cette source extérieure étant ensuite transmis à chaque capteur vibratoire par le système. De fait, chaque capteur vibratoire du système peut recevoir un ou plusieurs signaux vibratoires, chaque signal vibratoire pouvant être reçu simultanément par plusieurs capteurs.

De plus, le procédé de surveillance selon l'invention permet d'exploiter des mesures déjà effectuées par ces capteurs vibratoires pour surveiller ces capteurs vibratoires eux-mêmes. Par ailleurs, le procédé selon l'invention est utilisable quelque soit la phase de fonctionnement du système, même si le régime de rotation de ce système n'est pas stabilisé : il suffit que des signaux vibratoires soient présents dans le système.

Le procédé selon l'invention propose alors de déterminer en fonction de ces signaux vibratoires $S_i$ si chaque capteur vibratoire est défectueux. Par contre, pour pouvoir être comparés, ces signaux vibratoires $S_i$ doivent être émis par une même source et avoir subi des transformations équivalentes.

De manière générale tout système présente un nombre limité de sources vibratoires, même si ce nombre peut être important notamment sur les véhicules. Chaque source vibratoire peut émettre un signal vibratoire comportant toujours une composante ayant une fréquence caractéristique de cette source. On peut alors parler d'un signal vibratoire presque périodique. Ainsi, le signal vibratoire $S_i$ de cette source vibratoire est caractérisé par cette fréquence caractéristique $f_i$.

De plus, un signal vibratoire $S_i$ se propage jusqu'à chaque capteur vibratoire selon un chemin spécifique au cours duquel il peut subir diverses transformations, tels un ou plusieurs amortissements ou retards. Pour pouvoir comparer efficacement les signaux vibratoires mesurés par différents capteurs vibratoires, il faut s'assurer que ces signaux vibratoires n'ont pas subi de transformations significatives ou bien qu'ils ont subi des transformations équivalentes entre la source vibratoire et chaque capteur vibratoire. On dit alors que ces capteurs vibratoires ont des chemins de propagation équivalents ou bien que ces capteurs sont équivalents vis-à-vis de la source vibratoire.

De fait, lors de l'étape préliminaire, on regroupe chaque capteur vibratoire recevant un signal vibratoire $S_i$ d'une fréquence caractéristique $f_i$ émis par une même source au sein d'un groupe $G_i$ si ces capteurs vibratoires ont des chemins de propagation équivalents de ce signal vibratoire $S_i$. Chaque fréquence caractéristique $f_i$ correspond à des sources vibratoires différentes, $i$ représentant l'indice du groupe $G_i$, du signal vibratoire $S_i$ et de la fréquence caractéristique $f_i$ associés à ce groupe $G_i$.

Par contre, un groupe $G_i$ n'est créé que s'il contient au moins deux capteurs vibratoires distincts, mais un capteur peut apparaitre dans différents groupes $G_i$ s'il reçoit des signaux vibratoires $S_i$ associés à différentes sources vibratoires. Il est même souhaitable qu'un capteur vibratoire appartienne à différents groupes $G_i$ afin que les résultats du procédé soient plus fiables.

Cette étape préliminaire est réalisée une fois pour toutes avant la mise en route de la surveillance proprement dite des capteurs vibratoires par le procédé selon l'invention et n'est pas effectuée à chaque cycle de ce procédé. Cette étape préliminaire peut consister en une analyse a priori du système contenant les capteurs vibratoires, c'est à dire que les groupes $G_i$ sont constitués de façon théorique par analyse des plans du système, par la position de chaque capteur vibratoire et des différentes sources vibratoires ou bien a posteriori, c'est à dire de sorte que les groupes $G_i$ sont constitués suite à une ou plusieurs campagnes de mesures et à des signaux vibratoires $S_i$ réellement reçus par chaque capteur vibratoire.

Ensuite, les étapes suivantes peuvent se dérouler afin de réaliser la surveillance proprement dite des capteurs vibratoires du système.

Au cours de l'étape d'acquisition, on réalise tout d'abord une acquisition synchrone du signal vibratoire $S_i$ reçu par chaque capteur vibratoire de chaque groupe $G_i$. Une acquisition synchrone peut comporter une ou plusieurs mesures synchrones du signal vibratoire $S_i$ reçu par chaque capteur vibratoire. De préférence, une acquisition synchrone comporte plusieurs mesures synchrones du signal vibratoire $S_i$ reçu par chaque capteur vibratoire. L'utilisation de plusieurs mesures synchrones permet de constituer un spectre du signal vibratoire $S_i$ reçu par chaque capteur vibratoire et, par la suite, d'obtenir des résultats plus fiables et plus robustes de la surveillance de ces capteurs vibratoires.

De plus, chaque mesure doit être synchrone entre chaque capteur vibratoire d'un groupe $G_i$. En effet, chaque capteur vibratoire, ayant des chemins de propagation équivalents, mais spécifiques à chaque capteur vibratoire, reçoit le signal vibratoire $S_i$ avec potentiellement un retard qui doit être nécessairement constant. Ce retard potentiel se traduit par un déphasage du signal vibratoire reçu par chaque capteur vibratoire, mais n'a pas d'impact sur son amplitude. De fait, pour pouvoir être comparée, chaque mesure doit également être réalisée simultanément pour tous les capteurs vibratoires d'un groupe $G_i$, à un instant qui doit être connu précisément et que l'on désignera par la « date de réalisation » de la mesure synchrone par la suite.

Chaque mesure synchrone du signal vibratoire $S_i$ se caractérise donc par différentes informations permettant de l'identifier, qui sont la date de réalisation de cette mesure synchrone, le capteur vibratoire ayant permis d'effectuer cette mesure synchrone et le groupe $G_i$ auquel ce capteur vibratoire appartient et qui correspond à la fréquence caractéristique $f_i$ de ce signal vibratoire $S_i$.

Par ailleurs, une acquisition synchrone de chaque signal vibratoire $S_i$, est réalisée pendant un premier intervalle de temps $T_{acq}$. Afin de garantir que les mesures d'une acquisition couvrent une durée suffisante pour former un spectre du signal vibratoire $S_i$, ce premier intervalle de temps $T_{acq}$ est supérieur à une première valeur limite prédéterminée, cette première valeur limite prédéterminée pouvant être déterminée de façon théorique ou bien expérimentale suite à des essais par exemple. Chaque première mesure constituant cette acquisition est réalisée au début de ce premier intervalle de temps $T_{acq}$ et chaque dernière mesure est réalisée à la fin de ce premier intervalle de temps $T_{acq}$.

Cette première valeur limite prédéterminée dépend généralement de la fréquence de rotation du système surveillé. Dans le cas particulier d'un aéronef à voilure tournante, cette première valeur limite prédéterminée est par exemple égale à trois secondes (s).

De même, deux mesures synchrones successives de cette acquisition synchrone sont séparées par un second intervalle de temps $T_{mes}$. Afin de garantir que les mesures successives d'une acquisition sont suffisamment proches pour former avec précision un spectre du signal vibratoire $S_i$, ce second intervalle de temps $T_{mes}$ est inférieur à une seconde valeur limite prédéterminée. Comme précédemment, cette seconde valeur limite prédéterminée peut être déterminée de façon théorique ou bien expérimentale suite à des essais par exemple.

Par exemple, cette seconde valeur limite prédéterminée est de l'ordre d'une milliseconde (ms) dans le cas particulier d'un aéronef à voilure tournante.

Par ailleurs, cette acquisition synchrone du signal vibratoire $S_i$ reçu par chaque capteur vibratoire peut être déclenchée manuellement ou bien automatiquement.

Un déclenchement manuel peut être commandé par un opérateur du système, tel un pilote dans le cas particulier d'un aéronef à voilure tournante, pour démarrer un cycle de surveillance des capteurs vibratoires de ce système.

Ce cycle de surveillance peut également être déclenché automatiquement à partir de paramètres prédéterminés, par exemple selon les conditions de vol, les conditions avioniques ou bien de façon périodique. Par exemple, ce cycle de surveillance est déclenché automatiquement toutes les 10 minutes. Il peut également, dans le cas particulier d'un aéronef à voilure tournante, être déclenché automatiquement durant une phase de vol particulière reconnue par le système avionique de l'aéronef, suite à un évènement ou bien une suite d'évènements internes prédéterminés.

Après avoir réalisé cette acquisition synchrone du signal vibratoire $S_i$, on détermine, toujours lors de cette étape d'acquisition, à partir des mesures synchrones de cette acquisition du signal vibratoire $S_i$, un spectre de ce signal vibratoire $S_i$ reçu par chaque capteur vibratoire. Ce spectre du signal vibratoire $S_i$ peut être déterminé par différentes méthodes connues de l'homme du métier.

Ensuite, on calcule un coefficient de cohérence spectrale des spectres du signal vibratoire $S_i$ reçu par chaque couple de capteurs vibratoires de ce groupe. Chaque couple se compose de deux capteurs vibratoires d'un même groupe $G_i$ dont les acquisitions sont synchrones, c'est-à-dire de sorte que les mesures constituant ces acquisitions ont des dates de réalisation identiques. Cependant, afin que le procédé selon l'invention puisse prendre en compte une marge d'erreur ou d'incertitude de ces dates de réalisation de chaque mesure, une différence inférieure à une troisième valeur limite prédéterminée est tolérée entre les dates de réalisation des acquisitions pour former un couple de capteurs vibratoires. Là encore, cette troisième valeur limite prédéterminée peut être déterminée de façon théorique ou bien expérimentale suite à des essais par exemple.

Par exemple, cette troisième valeur limite prédéterminée est de l'ordre d'une microseconde ($\mu$s) dans le cas particulier d'un aéronef à voilure tournante.

On peut alors déterminer pour chaque couple de capteurs vibratoires un coefficient de cohérence spectrale des spectres du signal vibratoire $S_i$ reçu par les capteurs vibratoires de ce couple. Ce coefficient de cohérence spectrale caractérise la corrélation en fréquence des deux signaux vibratoires mesurés par les deux capteurs vibratoires du couple.

On peut calculer ce coefficient de cohérence spectrale entre ces deux signaux vibratoires par l'intermédiaire d'une fonction mathématique connue, par exemple selon la formule : $C_{xy}(f) = \dfrac{\left|G_{xy}(f)\right|^2}{G_{xx}(f).G_{yy}(f)}$ , où $x$ et $y$ sont deux signaux et $f$ la fréquence, $G_{xx}$ et $G_{yy}$ sont les densités spectrales respectivement des signaux $x$ et $y$ alors que $G_{xy}$ est la densité spectrale d'interaction entre les signaux $x$ et $y$. Ce coefficient de cohérence spectrale est égal à 1 lorsque les signaux $x$ et $y$ sont totalement corrélés à la fréquence $f$, c'est-à-dire que les deux signaux $x$ et $y$ ont le même contenu vibratoire, exactement ou bien à un retard constant près que l'on ne mentionnera plus par la suite, à la fréquence $f$. Ce coefficient de cohérence spectrale est égal à 0 lorsqu'aucun rapport ne peut être établi à la fréquence $f$ entre les deux signaux $x$ et $y$. Enfin, ce coefficient de cohérence spectrale a une valeur comprise entre 0 et 1 lorsque les signaux $x$ et $y$ sont partiellement corrélés à la fréquence $f$, c'est-à-dire par exemple de sorte qu'une décomposition de chaque signal $x$ et $y$ à la fréquence $f$ contient une partie commune.

Suivant le procédé selon l'invention, les coefficients de cohérence spectrale des signaux $S_i$ de chaque groupe $G_i$ sont calculés pour la fréquence caractéristique $f_i$ du groupe $G_i$.

Enfin, on construit une matrice de cohérence $C_i$ pour chaque groupe $G_i$ avec le coefficient de cohérence spectrale de chaque couple de capteurs vibratoires de ce groupe $G_i$. Cette matrice est une matrice carrée, dont l'ordre $N_i$ est le nombre de capteurs vibratoires contenus dans le groupe $G_i$. De plus, cette matrice $C_i$ est symétrique et les termes de sa diagonale sont égaux à 1.

En effet, chaque colonne de cette matrice de cohérence $C_i$ contient les coefficients de cohérence spectrale des couples contenant un premier capteur vibratoire du groupe $G_i$ et respectivement chaque capteur vibratoire, en commençant par ce premier capteur vibratoire de ce groupe $G_i$. Il en va de même pour chaque colonne suivante de cette matrice $C_i$. De fait, la diagonale de la matrice comprend les coefficients de cohérence spectrale de couples composés de deux fois le même capteur vibratoire. Il y a donc obligatoirement identité des deux signaux vibratoires reçus par chacun de ces couples et, par suite, le coefficient de cohérence spectrale est égal à 1 pour chacun de ces couples.

De plus, le coefficient de cohérence spectrale ne prend pas en compte un ordre entre les deux signaux vibratoires $S_i$, cette fonction mathématique étant commutative. On retrouve alors des valeurs de ces coefficients de cohérence spectrale identiques de part et d'autre de la diagonale de cette matrice, qui est donc symétrique.

Ensuite, au cours de l'étape d'analyse, on détermine les valeurs propres $\lambda n_i$ et les vecteurs propres $Vn_i$ associés de la matrice de cohérence $C_i$ de chaque groupe $G_i$, $n$ correspondant au numéro d'ordre de chaque valeur propre. La matrice de cohérence $C_i$ étant une matrice symétrique carrée d'ordre $N_i$, ce numéro d'ordre $n$ varie de 1 à $N_i$.

En mathématiques, et plus particulièrement en algèbre linéaire, le concept de vecteurs propres et de valeurs propres d'une matrice est connu et correspond à l'étude des axes privilégiés, selon lesquels une application représentée par cette matrice se comporte comme une dilatation, multipliant les vecteurs par une même constante. Ce rapport de dilatation est appelé valeur propre et les vecteurs auxquels il s'applique s'appellent vecteurs propres, réunis en un espace propre.

Une valeur propre peut être multiple, ce qui signifie alors qu'elle a un ordre de multiplicité égal au moins à 2. Par exemple, si on a trois valeurs propres identiques, son ordre de multiplicité est de 3.

Puis, on trie les valeurs propres $\lambda n_i$ par ordre croissant de leur valeur absolue, c'est-à-dire que la première valeur propre $\lambda_{1i}$ est la plus petite valeur propre de la matrice de cohérence $C_i$ en valeur absolue et la dernière valeur propre $\lambda_{Ni}$ est la plus grande valeur propre de la matrice de cohérence $C_i$ en valeur absolue.

Dans le cas de l'invention, la matrice de cohérence $C_i$ étant symétrique et tous ses coefficients étant réels car issus d'un calcul du coefficient de cohérence spectrale, la matrice de cohérence $C_i$ est diagonalisable. Par suite, il est connu que l'ordre de multiplicité de la valeur propre nulle d'une telle matrice est égal à la différence entre l'ordre de cette matrice et le rang de cette matrice. De fait, le rang de cette matrice $C_i$ est alors selon la relation suivante :

$$\text{Rang de la matrice } C_i = \text{nombre de capteurs vibratoires } N_i - \text{nombre de valeurs propres } \lambda n_i \text{ nulles} \quad .$$

Cependant, en pratique, les coefficients de cohérence spectrale ne sont jamais strictement nuls ou strictement égaux à 1. En effet, à cause des bruits perturbant les signaux vibratoires $S_i$ et des incertitudes de mesures, les signaux vibratoires $S_i$ ne sont jamais strictement cohérents en fréquence et jamais totalement incohérents. De fait, les coefficients de cohérence spectrale peuvent être proches de 0 dans le cas de signaux vibratoires très incohérents en fréquence, sans atteindre la valeur 0 ou bien proche de 1 dans le cas de signaux vibratoires presque cohérents, sans atteindre la valeur 1.

Par suite, les valeurs propres de la matrice de cohérence $C_i$ correspondante ne sont pas strictement nulles, mais peuvent être proches de 0. Ces valeurs propres proches de 0 seront tout de même prises en compte comme s'il s'agissait de valeurs propres nulles lorsque l'on considère qu'elles sont significativement nulles. Le rang de la matrice de cohérence $C_i$ est alors selon la relation :

$$\text{Rang de la matrice } C_i = \text{nombre de capteurs vibratoires } N_i - \text{nombre de valeurs propres } \lambda n_i \text{ significativement nulles}$$

Il existe différents méthodes permettant de définir qu'une valeur propre est significativement nulle.

Selon une première méthode, une valeur propre est significativement nulle si sa valeur absolue est inférieure à un premier seuil $\alpha$ prédéterminé. Le nombre de valeurs propres significativement nulles est alors donné par le numéro d'ordre de la dernière valeur propre inférieure à ce premier seuil $\alpha$ prédéterminé, les valeurs propres $\lambda n_i$ étant classées par ordre croissant de leur valeur absolue.

Selon une seconde méthode, une valeur propre $\lambda n_i$ est significativement nulle si la somme cumulée de sa valeur absolue et des valeurs absolues des valeurs propres précédentes est inférieure à un second seuil $\beta$ prédéterminé. Le nombre de valeurs propres significativement nulles est alors donné par le numéro d'ordre de la dernière valeur propre $\lambda n_i$ dont la somme cumulée est inférieure à ce second seuil $\beta$ prédéterminé. Par exemple, la somme cumulée de la valeur propre $\lambda j_i$ est la somme des valeurs absolues des valeurs propres $\lambda n_i$ avec le numéro d'ordre $n$ variant de 1 à $j$. Par contre, pour appliquer cette seconde méthode, il est impératif que les valeurs propres $\lambda n_i$ soient classées par ordre croissant de leur valeur absolue, ce qui a été fait lors de cette étape d'analyse.

Le premier seuil $\alpha$ prédéterminé et le second seuil $\beta$ prédéterminé peuvent être déterminés de façon théorique ou bien expérimentale suite à des essais par exemple. Ils peuvent notamment être ajustés par l'homme du métier en fonction d'un compromis entre le taux de fausses alarmes et le taux de pannes non détectées, et éventuellement en prenant en compte les bruits perturbant les signaux vibratoires $S_i$ et les incertitudes des mesures.

Enfin, le rang de la matrice de cohérence $C_i$ est directement lié au nombre de capteurs vibratoires probablement défectueux et on peut ensuite identifier ces capteurs vibratoires probablement défectueux.

En effet, si tous les capteurs vibratoires fonctionnent correctement, tous les signaux vibratoires $S_i$ mesurés au sein d'un groupe $G_i$ sont identiques, aux bruits et incertitudes de mesures près. Par suite, les coefficients de cohérence spectrale correspondant sont théoriquement égaux à 1. Le rang de cette matrice de cohérence $C_i$ est alors égal à 1, cette matrice $C_i$, constituée uniquement de coefficients égaux à 1, ayant deux valeurs propres distinctes, une première valeur propre égale à 1 d'ordre de multiplicité de 1 et une seconde valeur propre égale à 0 d'ordre de multiplicité de $N_i$ - 1, $N_i$ étant l'ordre de cette matrice de cohérence $C_i$. Dans ce cas, le nombre de capteurs vibratoires défectueux est 0 et le rang de la matrice de cohérence $C_i$ est égal à 1.

De même, si tous les coefficients de cohérence spectrale entre les signaux mesurés par les capteurs vibratoires

d'un groupe $G_i$ sont théoriquement nuls, la matrice de cohérence $C_i$ correspondante est une matrice diagonale comportant des valeurs égales à 1 sur cette diagonale et égales à 0 ailleurs. Le rang d'une telle matrice de cohérence $C_i$ est alors égal à $N_i$, qui correspond également à l'ordre de cette matrice $C_i$ ainsi qu'au nombre de capteurs vibratoires du groupe $G_i$. Cette matrice $C_i$ a alors une seule valeur propre distincte, égale à 1 d'ordre de multiplicité de $N_i$. Dans ce cas, le nombre de capteurs vibratoires défectueux peut être $N_i$ ou ($N_i$ - 1) et le rang de la matrice de cohérence $C_i$ est alors égal à $N_i$.

En effet, que l'on ait un capteur vibratoire fonctionnel ou aucun capteur vibratoire fonctionnel, tous les coefficients de cohérence spectrale sont théoriquement nuls, car on ne peut pas avoir un couple avec deux capteurs vibratoires fonctionnels. De fait, il est impossible dans ce cas de déterminer le nombre exact de capteurs vibratoires défectueux : on peut juste déterminer que ce nombre est soit $N_i$ soit ($N_i$ - 1).

De façon générale, si un groupe $G_i$ comporte $j$ capteurs vibratoires défectueux et, par suite, $N_i$ - $j$ capteurs vibratoires fonctionnels, le rang de la matrice de cohérence $C_i$ est $j$+1.

On peut alors en déduire les relations générales suivantes déterminant le nombre de capteurs vibratoires probablement défectueux parmi chaque groupe $G_i$.

Ainsi, lorsque le rang de la matrice de cohérence $C_i$ est strictement inférieur au nombre de capteurs vibratoires du groupe $G_i$, le nombre de capteurs vibratoires probablement défectueux parmi chaque groupe $G_i$ est selon la relation :

$$\text{Nombre de capteurs vibratoires probablement défectueux} = \text{Rang de la matrice } C_i - 1.$$

Rang de la matrice $C_i$ - 1.

Lorsque le rang de la matrice de cohérence $C_i$ est égal au nombre de capteurs vibratoires du groupe la matrice $C_i$, le nombre de capteurs vibratoires probablement défectueux parmi chaque groupe $G_i$ est selon la relation :

$$\text{Nombre de capteurs vibratoires probablement défectueux} = \text{Rang de la matrice } C_i - 1,$$

ou bien

$$\text{Nombre de capteurs vibratoires probablement défectueux} = \text{Rang de la matrice } C_i.$$

Pour terminer cette étape d'analyse, il faut identifier ces capteurs vibratoires probablement défectueux parmi l'ensemble des capteurs vibratoires de chaque groupe $G_i$. Dans ce but, on utilise un vecteur propre correspondant à une valeur propre non nulle ou non significativement nulle de la matrice de cohérence $C_i$. Le ou les capteurs vibratoires probablement défectueux sont alors celui ou ceux correspondant à la ou les coordonnées de ce vecteur propre qui sont les plus faibles en valeur absolue.

De préférence, on utilise le vecteur propre correspondant à la plus grande valeur propre de ce groupe $G_i$ en valeur absolue. En effet, cette ou ces coordonnées correspondent aux coefficients de cohérence spectrale proches de 0 de la matrice de cohérence $C_i$ et, par suite, aux capteurs vibratoires probablement défectueux.

Par exemple, pour un groupe $G_i$ de cinq capteurs vibratoires, tout vecteur propre de la matrice de cohérence $C_i$ a cinq coordonnées. De fait, s'il y a un seul capteur vibratoire probablement défectueux dans ce groupe $G_i$, il correspond à la coordonnée la plus faible du vecteur propre $V5_i$ associé à la valeur propre la plus grande, c'est-à-dire la dernière selon l'ordre croissant des valeurs absolues de ces valeurs propres. Par contre, s'il y a trois capteurs vibratoires probablement défectueux dans ce groupe $G_i$, ils correspondent aux trois coordonnées du vecteur propre $V5_i$ les plus faibles.

On peut également utiliser au moins un autre vecteur propre correspondant à une valeur propre non nulle ou non significativement nulle de la matrice de cohérence $C_i$ pour confirmer ces capteurs vibratoires probablement défectueux.

Enfin, lors de l'étape de diagnostic, on compile les analyses de chaque groupe $G_i$ afin de confirmer si les capteurs vibratoires qui ont été déterminés probablement défectueux sont bien considérés comme défectueux au sein du système.

Un capteur vibratoire probablement défectueux est déterminé à partir d'une acquisition d'un signal vibratoire $S_i$ par les capteurs vibratoires d'un groupe $G_i$. Il y a donc une présomption que ce capteur vibratoire soit défectueux qui reste faible car basée sur une acquisition d'un seul signal vibratoire $S_i$ et de sa comparaison avec l'acquisition du même signal vibratoire $S_i$ reçu par d'autres capteurs vibratoires.

Par contre, chaque capteur vibratoire faisant de préférence partie de plusieurs groupes $G_i$, on peut vérifier si chaque capteur vibratoire est probablement défectueux pour tous les groupes $G_i$ dont il fait partie, une majorité de ces groupes $G_i$ ou bien peu de ces groupes $G_i$. On peut ainsi obtenir une confirmation que ce capteur vibratoire est probablement défectueux pour plusieurs groupes $G_i$ du système et qu'il doit être considéré comme défectueux au sein du système.

On peut par exemple déterminer un rapport entre le nombre $L$ de groupes $G_i$ dans lequel un capteur vibratoire est probablement défectueux et le nombre total $K$ de groupes $G_i$ auxquels ce capteur vibratoire appartient. Ensuite si ce rapport est supérieur ou égal à un troisième seuil $\rho$ prédéterminé, ce capteur vibratoire est considéré comme défectueux.

Ce troisième seuil $\rho$ prédéterminé peut être déterminé de façon théorique ou bien expérimentale suite à des essais par exemple.

Une fois les capteurs vibratoires du système considérés comme défectueux identifiés, il est possible, lors de cette étape de diagnostic, d'afficher sur un moyen de visualisation approprié ces capteurs vibratoires considérés comme défectueux. Ainsi un opérateur du système ou bien un pilote dans le cas particulier d'un aéronef à voilure tournante est informé de ces capteurs vibratoires considérés comme défectueux et peut agir en conséquence.

Ce moyen de visualisation approprié peut être intégré dans le système ou bien être extérieur au système.

Avantageusement, ce procédé est une méthode absolue dans le sens où une seule acquisition suffit pour déterminer s'il y a ou non un capteur vibratoire défectueux au sein du système. En effet, et contrairement à d'autres méthodes se basant par exemple sur une évolution des mesures au cours de différents cycles de fonctionnement du système, le procédé selon l'invention permet de statuer sur la présence d'un capteur vibratoire défectueux après une seule étape d'acquisition, une seule étape d'analyse et une seule étape de diagnostic. De fait, un capteur vibratoire défectueux peut être détecté dès l'apparition d'un défaut ou bien dès la mise en route du procédé de surveillance. Cependant, le système doit être en fonctionnement pour permettre la surveillance des capteurs vibratoires, le démarrage du système pouvant être simultanée à la mise en route du procédé ou bien antérieur.

De plus, il ne nécessite aucune information complémentaire aux acquisitions de chaque capteur vibratoire. En effet, il n'est pas nécessaire d'avoir d'information sur le type de système sur lequel sont installés les capteurs vibratoires, ni sur son fonctionnement, tel qu'un couple ou un régime de rotation par exemple.

Par ailleurs, le procédé de surveillance selon l'invention n'utilise pas d'acquisitions spécifiques à cette surveillance, mais une acquisition d'un signal vibratoire quelconque est suffisante du moment qu'au moins deux capteurs vibratoires reçoivent ce signal vibratoire quelconque suivant des chemins de propagation équivalents.

Avantageusement, le procédé selon l'invention peut être réajusté en fonction des résultats qu'il fournit. En effet, si un capteur vibratoire est toujours probablement défectueux selon un groupe $G_i$ alors qu'il n'est au final jamais considéré comme défectueux, on peut supposer que son appartenance à ce groupe $G_i$ peut être remise en cause. Ce capteur vibratoire doit alors être sorti de ce groupe $G_i$.

L'invention et ses avantages apparaîtront avec plus de détails dans le cadre de la description qui suit avec des exemples de réalisation donnés à titre illustratif en référence aux figures annexées qui représentent :

- la figure 1, un schéma synoptique du procédé selon l'invention,

- la figure 2, une vue d'un aéronef à voilure tournante utilisant ce procédé,

- la figure 3, une représentation d'un signal vibratoire acquis par trois capteurs vibratoires, et

- la figure 4, une représentation des valeurs propres d'une matrice de cohérence.

Les éléments présents dans plusieurs figures distinctes sont affectés d'une seule et même référence.

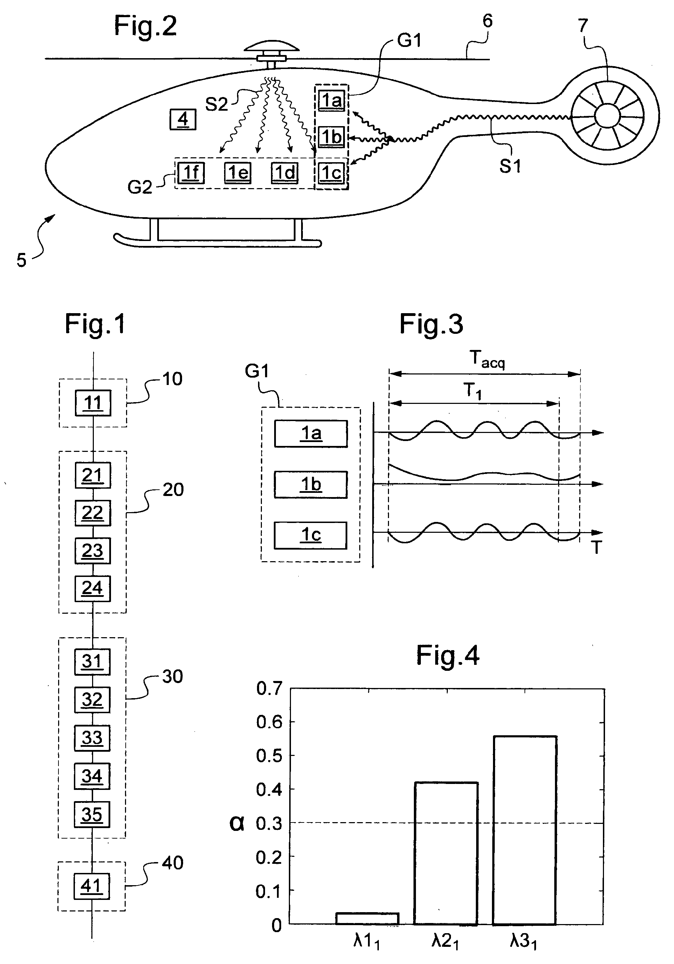

La figure 1 présente un schéma synoptique du procédé selon l'invention se déroulant selon quatre étapes principales, chacune de ces étapes principales comportant une ou plusieurs sous-étapes. Ainsi, ce procédé concerne un procédé de surveillance de capteurs vibratoires 1 d'un système 5 et ses quatre étapes principales sont une étape préliminaire 10, une étape d'acquisition 20, une étape d'analyse 30 et une étape de diagnostic 40.

Un exemple d'un tel système 5 est représenté sur la figure 2. Ce système 5, qui est selon cet exemple un aéronef à voilure tournante, comporte des capteurs vibratoires 1, un rotor principal 6, un rotor arrière 7 et un moyen de visualisation 4, tel un écran. A l'intérieur de ce système 5 circulent deux signaux vibratoires $S_1, S_2$. Le premier signal vibratoire $S_1$ est émis par le rotor arrière 7 du système 5 à une fréquence caractéristique $f_1$ alors que le signal vibratoire $S_2$ est émis par le rotor principal 6 du système 5 à une fréquence caractéristique $f_2$.

Tout d'abord, lors de l'étape préliminaire 10 comprenant une seule sous étape 11, on définit deux groupes $G_1$, $G_2$ comportant des capteurs vibratoires 1, un premier groupe $G_1$ est constitué de trois capteurs vibratoires 1a, 1b, 1c alors que le second groupe $G_2$ est constitué de quatre capteurs vibratoires 1c,1d,1e,1f, le capteur vibratoire 1c étant présent dans les deux groupes $G_1, G_2$.

Les trois capteurs vibratoires 1a, 1b, 1c font partie du premier groupe $G_1$, car ils reçoivent le premier signal vibratoire $S_1$ de fréquence caractéristique $f_1$ selon des premiers chemins de propagation équivalents, c'est-à-dire de sorte que le premier signal vibratoire $S_1$ se propage du rotor arrière 7 jusqu'à chaque capteur vibratoire 1a,1b,1c selon des chemins spécifiques au cours desquels il subit des transformations équivalentes, telles un ou plusieurs amortissements ou retards. Ainsi, les acquisitions du premier signal vibratoire $S_i$ faite par chaque capteur vibratoire 1a, 1b, 1c du premier groupe $G_1$ peuvent être comparées de façon efficace, bien qu'un retard potentiel existe entre chaque signal vibratoire reçu par les capteurs vibratoires 1a,1b,1c.

De même, les quatre capteurs vibratoires 1c,1d,1e,1f font partie du second groupe $G_2$, car ils reçoivent le second signal vibratoire $S_2$ de fréquence caractéristique $f_2$ selon des seconds chemins de propagation équivalents.

Cette étape préliminaire 10 est réalisée une fois pour toutes avant la mise en route de la surveillance proprement dite des capteurs vibratoires par le procédé selon l'invention et n'est pas effectuée à chaque cycle de ce procédé, contrairement aux étapes suivantes.

Lors de l'étape d'acquisition 20, on réalise, au cours d'une seconde sous-étape 21, au moins une acquisition synchrone de chaque signal vibratoire $S_1, S_2$ reçu respectivement par chaque capteur vibratoire 1 des groupes $G_1, G_2$. De plus, chaque acquisition doit être synchrone, c'est-à-dire réalisée simultanément, pour tous les capteurs vibratoires 1 d'un groupe $G_1, G_2$ afin de pouvoir être comparée entre elles.

De préférence, chaque acquisition synchrone comporte plusieurs mesures synchrones pour chaque capteur vibratoire constituant une acquisition de ce signal vibratoire $S_1$, $S_2$. Chaque mesure synchrone se caractérise par la date de réalisation de cette mesure synchrone, le capteur vibratoire 1 ayant permis d'effectuer cette mesure synchrone et par le groupe $G_1$, $G_2$ auquel ce capteur vibratoire 1 appartient.

Par ailleurs, l'acquisition de ce premier signal vibratoire $S_1$ est réalisée pendant un premier intervalle de temps $T_{acq}$. Afin de garantir que les mesures de cette acquisition couvrent une durée suffisante pour former un spectre du premier signal vibratoire $S_1$ qui soit exploitable par la suite, ce premier intervalle de temps $T_{acq}$ est supérieur à une première valeur limite prédéterminée $T_{L1}$, cette première valeur limite prédéterminée $T_{L1}$ pouvant être déterminée de façon théorique ou bien expérimentale suite à des essais par exemple.

De plus, deux mesures synchrones successives d'une acquisition sont séparées par un second intervalle de temps $T_{mes}$. Afin de garantir que ces mesures successives sont suffisamment proches pour former avec précision un spectre du signal vibratoire $S_1, S_2$, ce second intervalle de temps $T_{mes}$ est inférieur à une seconde valeur limite prédéterminée $T_{L2}$. Comme précédemment, cette seconde valeur limite prédéterminée $T_{L2}$ peut être déterminée de façon théorique ou bien expérimentale suite à des essais par exemple.

En outre, cette acquisition de chaque signal vibratoire $S_1, S_2$ reçu par chaque capteur vibratoire 1 peut être déclenchée manuellement ou bien automatiquement.

Chaque acquisition permet alors de déterminer, au cours d'une troisième sous-étape 22 et à partir des mesures de cette acquisition, un spectre du signal vibratoire $S_1, S_2$ reçu par chaque capteur vibratoire 1 de chaque groupe $S_1$, $S_2$. Par exemple, la figure 3 illustre des représentations du premier signal vibratoire $S_1$ réalisés respectivement par les capteurs vibratoires 1a, 1b, 1c du premier groupe $G_1$.

Ensuite, au cours d'une quatrième sous-étape 23, on calcule pour chaque couple de capteurs vibratoires 1 d'un groupe $G_1, G_2$ un coefficient de cohérence spectrale des spectres du signal vibratoire $S_1, S_2$ reçu par ce couple de capteurs vibratoires 1. Chaque couple de capteurs vibratoires 1 se compose de deux capteurs vibratoires 1 d'un même groupe $G_1, G_2$ dont les acquisitions ont des dates de réalisation identiques. Cependant une marge d'erreur ou d'incertitude sur ces dates de réalisation peut éventuellement être prise en compte, la différence entre ces dates de réalisation étant alors inférieure à une troisième valeur limite prédéterminée $T_{L3}$.

Le coefficient de cohérence spectrale permet de comparer des signaux, essentiellement la cohérence des fréquences qui les composent. Ainsi, en déterminant les coefficients de cohérence spectrale correspondant aux acquisitions des deux capteurs vibratoires 1, on peut déterminer s'il y a cohérence entre les fréquences de ces deux acquisitions.

On peut calculer ce coefficient de cohérence spectrale selon la fonction mathématique connue :

$$C_{xy}(f) = \frac{\left| G_{xy}(f) \right|^2}{G_{xx}(f).G_{yy}(f)} \,,$$ où $x$ et $y$ sont deux signaux et $f$ la fréquence, $G_{xx}$ et $G_{yy}$ sont les densités spectrales respectivement des signaux $x$ et $y$ alors que $G_{xy}$ est la densité spectrale d'interaction entre les signaux $x$ et $y$. Ce coefficient de cohérence spectrale est égal à 1 lorsqu'il y a une cohérence parfaite entre les fréquences des signaux $x$ et $y$. Ce coefficient de cohérence spectrale est par contre égal à 0 lorsqu'il y a aucune cohérence entre les fréquences des signaux $x$ et $y$. Enfin, ce coefficient de cohérence spectrale a une valeur comprise entre 0 et 1 lorsqu'il y a une cohérence partielle entre les fréquences des signaux $x$ et $y$.

Suivant le procédé selon l'invention, les coefficients de cohérence spectrale des signaux $S_1,S_2$ pour chaque groupe $G_1,G_2$ sont calculés pour la fréquence caractéristique $f_1,f_2$ respectivement des groupes $G_1,G_2$.

Enfin, au cours d'une cinquième sous-étape 24, on construit une matrice de cohérence $C_1,C_2$ pour chaque groupe $G_1,G_2$. Chaque valeur de cette matrice $C_1,C_2$ est le coefficient de cohérence spectrale de chaque couple de capteurs vibratoires 1 de ce groupe $G_1,G_2$. On présente ci-après un exemple de matrice de cohérence $C_1$ en rapport avec les acquisitions des capteurs 1a, 1b, 1c du premier groupe $G_1$ représentées sur la figure 3 :

$$C_1 = \begin{bmatrix} 1 & 0,1 & 0,96 \\ 0,1 & 1 & 0,08 \\ 0,96 & 0,08 & 1 \end{bmatrix}.$$

Cette matrice de cohérence $C_1$, est une matrice carrée, dont l'ordre est le nombre de capteurs vibratoires 1 contenus dans le groupe $G_1$, c'est-à-dire trois dans le cas présent. De plus, la diagonale de la matrice comprend les coefficients de cohérence spectrale de couples composés de deux fois le même capteur vibratoire. Il y a donc obligatoirement identité des deux signaux vibratoires reçus par chacun de ces couples. De fait, il y a obligatoirement cohérence parfaite, donc ce coefficient de cohérence spectrale est égal à 1. De plus, le calcul de ce coefficient de cohérence spectrale étant une fonction commutative, cette matrice $C_1$ est donc symétrique.

Dans cet exemple, hormis les termes de la diagonale, les valeurs des coefficients de cohérence spectrale sont différentes de 0 et de 1. En pratique, les signaux vibratoires $S_1,S_2$ sont perturbés, au sein du système 5 par différents bruits qui peuvent modifier légèrement, et différemment suivant chaque capteur vibratoire 1, ces signaux vibratoires $S_1$, $S_2$. De plus, chaque capteur vibratoire peut ajouter une incertitude à chaque acquisition qu'il réalise. De fait, il peut ne pas y avoir cohérence parfaite entre deux acquisitions d'un même signal vibratoire $S_1,S_2$ réalisées par deux capteurs vibratoires fonctionnels, mais le coefficient de cohérence spectrale correspondant est tout de même proche de la valeur 1. De même, si un des deux capteurs vibratoires 1 est défectueux, le coefficient de cohérence spectrale correspondant n'est pas nul, mais proche de la valeur 0, car il peut y avoir une partie des deux acquisitions du signal vibratoire $S_1,S_2$ qui soit cohérente, par exemple au niveau des bruits subis par le signal vibratoire $S_1,S_2$ avoir d'atteindre les deux capteurs vibratoires 1.

Lors de l'étape d'analyse 30, on détermine, au cours d'une sixième sous-étape 31, les valeurs propres $\lambda n_1$, $\lambda n_2$ et les vecteurs propres $Vn_1,Vn_2$ associés de chaque matrice de cohérence $C_1,C_2$ des groupes $G_1,G_2$. Différentes méthodes de calcul de ces valeurs propres $\lambda n_1,\lambda n_2$ et des vecteurs propres correspondants $Vn_1,Vn_2$ existent et peuvent être appliquées. La matrice de cohérence $C_1$ possèdent trois valeurs propres $\lambda 1_1,\lambda 2_1,\lambda 3_1$ car le premier groupe $G_1$ contient trois capteurs vibratoires 1a, 1b, 1c et la matrice de cohérence $C_2$ possèdent quatre valeurs propres $\lambda 1_2,\lambda 2_2$, $\lambda 3_2,\lambda 4_2$ car le premier groupe $G_2$ contient quatre capteurs vibratoires 1c,1d,1e,1f.

Ensuite, au cours d'une septième sous-étape 32, on trie les valeurs propres $\lambda n_1,\lambda n_2$ pour chaque matrice de cohérence $C_1,C_2$ par ordre croissant de leur valeur absolue. Les trois valeurs propres $\lambda 1_1,\lambda 2_1,\lambda 3_1$ de la matrice $C_1$ mentionnée précédemment en exemple sont distinctes et représentées sur la figure 4. On constate qu'aucune valeur propre $\lambda 1_1,\lambda 2_1,\lambda 3_1$ n'est strictement nulle. Cependant, la première valeur propre $\lambda 1_1$ est inférieure à un premier seuil $\alpha$ prédéterminé et peut alors est considérée comme significativement nulle, par exemple, le premier seuil $\alpha$ prédéterminé est égal à 0.3.

Lors d'une huitième sous-étape 33, on calcule le rang des matrices de cohérence $C_1,C_2$ selon la relation :

$$\text{Rang de la matrice } C_i = \text{nombre de capteurs vibratoires } N_i - \text{nombre de valeurs propres } \lambda n_i \text{ significativement nulles.}$$

Suivant l'exemple précédent, la matrice $C_i$ comporte trois capteurs vibratoires 1 et une valeur propre $\lambda 1_1$ significativement nulle. Le rang de cette matrice $C_1$ est donc deux

On calcule ensuite, lors d'une neuvième sous-étape 34, le nombre de capteurs vibratoires probablement dé-

fectueux pour les groupe $G_1, G_2$.

On peut alors distinguer deux cas, selon le rang de la matrice de chaque groupe $G_1, G_2$.

Si le rang de la matrice de cohérence $C_1, C_2$ est strictement inférieur au nombre de capteurs vibratoires 1 du groupe $G_1, G_2$, le nombre de capteurs vibratoires probablement défectueux parmi ce groupe $G_1, G_2$ est selon la relation :

**Nombre de capteurs vibratoires probablement défectueux = Rang de la matrice $C_i$ − 1.**

SI le rang de la matrice de cohérence $C_i$ est égal au nombre de capteurs vibratoires du groupe $G_1, G_2$, le nombre de capteurs vibratoires probablement défectueux parmi ce groupe $G_1, G_2$ est selon la relation :

**Nombre de capteurs vibratoires probablement défectueux = Rang de la matrice $C_i$ − 1,**

ou bien

**Nombre de capteurs vibratoires probablement défectueux = Rang de la matrice $C_i$.**

En effet, dans le cas particulier où un seul capteur vibratoire 1 est fonctionnel dans un groupe $G_1, G_2$, il n'y a aucune cohérence spectrale entre les acquisitions de chaque capteur vibratoire 1, ce qui est également le cas lorsqu'aucun capteur vibratoire 1 n'est fonctionnel dans un groupe $G_1, G_2$. Il est donc impossible de différencier ces deux cas afin de confirmer si aucun capteur vibratoire n'est fonctionnel ou bien si un seul capteur vibratoire est fonctionnel. Cependant, il est possible, si un ou plusieurs de ces capteurs vibratoires 1 font partie des deux groupes $G_1, G_2$ de confirmer par exemple que tous les capteurs vibratoires 1 sont probablement défectueux. Dans le cas contraire, une autre méthode doit être utilisée pour déterminer si un capteur vibratoire 1 est fonctionnel pour le groupe $G_1, G_2$.

Enfin, au cours d'une dixième sous-étape 35, on identifie le ou les capteurs vibratoires 1 probablement défectueux des groupe $G_1, G_2$. On utilise de préférence le vecteur propre correspondant à la plus grande valeur propre en valeur absolue de chaque groupes $G_1, G_2$, qui est donc la dernière valeur propre selon le tri effectué lors de la sous-étape 32. Le ou les capteurs vibratoires probablement défectueux sont alors celui ou ceux correspondant à la ou les coordonnées de ce vecteur propre qui sont la ou les plus faibles en valeur absolue.

Par exemple, pour la matrice $C_1$ précédemment évoquée, la plus grande valeur propre $\lambda 3_1$ correspond au vecteur propre

$$V3_1 = \begin{bmatrix} 0{,}86 \\ 0{,}12 \\ 0{,}78 \end{bmatrix}.$$

On sait que l'on a un capteur vibratoire 1 probablement défectueux et la cordonnée la plus faible de ce vecteur propre $\lambda 3_1$ est la seconde. Par suite, cette seconde coordonnée correspond au second capteur vibratoire 1b qui a permis de construire la matrice de cohérence $C_1$. En conséquence ce second capteur vibratoire 1 est probablement défectueux.

Enfin, lors de l'étape de diagnostic 40, au cour d'une onzième sous-étape 41, on compile les analyses de chaque groupe $G_1, G_2$ afin de confirmer si les capteurs vibratoires 1 qui ont été déterminés probablement défectueux sont bien considérés comme défectueux au sein du système 5.

On calcule un rapport entre le nombre $L$ de groupes $G_1, G_2$ dans lequel un capteur vibratoire 1 est probablement défectueux et le nombre total $K$ de groupes $G_1, G_2$ auxquels ce capteur vibratoire 1 appartient. Ensuite si ce rapport est supérieur ou égal à un troisième seuil $\rho$ prédéterminé, ce capteur vibratoire 1 est considéré comme défectueux.

Ce troisième seuil $\rho$ prédéterminé peut être déterminé de façon théorique ou bien expérimentale suite à des essais par exemple.

Une fois que les capteurs vibratoires 1 du système 5 considérés comme défectueux sont identifiés, il est possible, lors d'une douzième sous-étape, faisant partie de l'étape de diagnostic 40, d'afficher sur un moyen de visualisation 4 approprié ces capteurs vibratoires 1 considérés comme défectueux. Ainsi un pilote de l'aéronef à voilure tournante 5 est informé de ces capteurs vibratoires 1 considérés comme défectueux et peut agir en conséquence. Ce moyen de visualisation 4 peut être intégré dans l'aéronef à voilure tournante 5.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Notamment, la figure 1 décrit uniquement deux signaux vibratoires $S_1, S_2$ issus de deux sources vibratoires et deux groupes $G_1, G_2$ de capteurs vibratoires 1. Cependant, ce nombre de signaux vibratoires et de groupes de capteurs vibratoires 1 n'est pas limitatif et peut donc être plus important.

## Revendications

1. Procédé de surveillance de capteurs vibratoires (1) installés sur un système (5), ledit système (5) comportant au moins deux capteurs vibratoires (1),

   au cours duquel :

   - lors d'une étape préliminaire (10),

     ◦ on définit au moins un groupe ($G_1, G_2$) comportant au moins deux capteurs vibratoires (1) recevant un signal vibratoire ($S_1, S_2$) à une fréquence caractéristique ($f_1, f_2$), ledit signal vibratoire ($S_1, S_2$) suivant des chemins de propagation équivalents jusqu'aux dits capteurs vibratoires (1),

   - lors d'une étape d'acquisition (20),

     ◦ on réalise une acquisition synchrone dudit signal vibratoire ($S_1, S_2$) reçu par chaque capteur vibratoire (1) dudit groupe ($G_1, G_2$),
     ◦ on détermine à partir de ladite acquisition synchrone un spectre du signal vibratoire ($S_1, S_2$) reçu par chaque capteur vibratoire (1),
     ◦ on calcule pour chaque couple de capteurs vibratoires (1) dudit groupe ($G_1, G_2$) un coefficient de cohérence spectrale desdits spectres du signal vibratoire ($S_1, S_2$) reçu par ledit couple de capteurs vibratoires (1), et
     ◦ on construit une matrice de cohérence ($C_1, C_2$) dudit groupe ($G_1, G_2$),

   - lors d'une étape d'analyse (30),

     ◦ on détermine les valeurs propres ($\lambda n_1, \lambda n_2$) et les vecteurs propres ($Vn_1, Vn_2$) associés de ladite matrice de cohérence ($C_1, C_2$) dudit groupe ($G_1, G_2$),
     ◦ on trie lesdites valeurs propres ($\lambda n_1, \lambda n_2$) par ordre croissant de leur valeur absolue,
     ◦ on calcule le rang de ladite matrice de cohérence ($C_1, C_2$),
     ◦ on calcule le nombre de capteurs vibratoires (1) probablement défectueux pour chaque groupe ($G_1, G_2$), et
     ◦ on identifie lesdits capteurs vibratoires (1) probablement défectueux dudit groupe ($G_1, G_2$),

   - lors d'une étape de diagnostic (40),

     ◦ on compile les analyses de chaque groupe ($G_1, G_2$) afin de confirmer lesdits capteurs vibratoires (1) considérés comme défectueux pour ledit système (5).

2. Procédé de surveillance selon la revendication 1,
   **caractérisé en ce que** chaque acquisition synchrone comporte au moins deux mesures synchrones desdits signaux vibratoires ($S_1, S_2$) reçus par chaque capteur vibratoire (1) dudit groupe ($G_1, G_2$).

3. Procédé de surveillance selon la revendication 2,
   **caractérisé en ce que**, pour chaque acquisition, lesdites mesures synchrones dudit signal vibratoire ($S_1, S_2$) sont faites pendant un premier intervalle de temps $T_{acq}$ supérieur à une première valeur limite prédéterminée, chaque première mesure étant faite au début dudit premier intervalle de temps $T_{acq}$ et chaque dernière mesure étant faite à la fin dudit premier intervalle de temps $T_{acq}$.

4. Procédé de surveillance selon l'une quelconque des revendications 2 à 3, **caractérisé en ce qu'**un second intervalle de temps $T_{mes}$ sépare deux mesures synchrones successives dudit signal vibratoire ($S_1,S_2$), ledit second intervalle de temps $T_{mes}$ étant inférieur à une seconde valeur limite déterminée.

5. Procédé de surveillance selon l'une quelconque des revendications 1 à 4, **caractérisé en ce qu'**à chaque mesure synchrone sont associées :

   - la date de réalisation de ladite mesure synchrone,
   - ledit capteur vibratoire (1) ayant permis d'effectuer ladite mesure, et
   - ledit groupe ($G_1,G_2$) dudit capteur vibratoire (1) correspondant à ladite fréquence caractéristique ($f_1,f_2$) dudit signal vibratoire ($S_1,S_2$) reçu par ledit capteur vibratoire (1).

6. Procédé de surveillance selon la revendication 5, **caractérisé en ce que**, lors de ladite étape d'acquisition (20), chaque couple se compose de deux capteurs vibratoires (1) dudit groupe ($G_1,G_2$) dont lesdites mesures synchrones ont des dates de réalisation ayant une différence inférieure à une troisième valeur limite prédéterminée.

7. Procédé de surveillance selon l'une quelconque des revendications 1 à 6, **caractérisé en ce que** ledit rang de ladite matrice de cohérence ($C_1,C_2$) est égal au nombre desdits capteurs vibratoires (1) dudit groupe ($G_1,G_2$) moins le nombre desdites valeurs propres ($\lambda n_1,\lambda n_2$) nulles.

8. Procédé de surveillance selon l'une quelconque des revendications 1 à 6, **caractérisé en ce que** ledit rang de ladite matrice de cohérence ($C_1,C_2$) est égal au nombre desdits capteurs vibratoires (1) dudit groupe ($G_1,G_2$) moins le nombre desdites valeurs propres ($\lambda n_1,\lambda n_2$) sensiblement nulles.

9. Procédé de surveillance selon la revendication 8, **caractérisé en ce qu'**une valeur propre ($\lambda n_1,\lambda n_2$) est sensiblement nulle si sa valeur absolue est inférieure à un premier seuil $\alpha$ prédéterminé.

10. Procédé de surveillance selon la revendication 8, **caractérisé en ce qu'**une valeur propre ($\lambda n_1,\lambda n_2$) est sensiblement nulle si la somme cumulée de sa valeur absolue et des valeurs absolues desdites valeurs propres ($\lambda n_1,\lambda n_2$) précédentes selon l'ordre croissant de leur valeur absolue est inférieure à un second seuil $\beta$ prédéterminé.

11. Procédé de surveillance selon l'une quelconque des revendications 1 à 10, **caractérisé en ce que**, lors de ladite étape d'analyse (30), si ledit rang de la matrice de cohérence ($C_1,C_2$) est inférieur au nombre total desdits capteurs vibratoires (1) dudit groupe ($G_1,G_2$), le nombre desdits capteurs vibratoires (1) dudit groupe ($G_1,G_2$) probablement défectueux est égal audit rang de ladite matrice de cohérence ($C_1,C_2$) moins une unité.

12. Procédé de surveillance selon l'une quelconque des revendications 1 à 10, **caractérisé en ce que**, lors de ladite étape d'analyse (30), si ledit rang de la matrice de cohérence ($C_1,C_2$) est égal au nombre total desdits capteurs vibratoires (1) dudit groupe ($G_1,G_2$), le nombre desdits capteurs vibratoires (1) dudit groupe ($G_1,G_2$) probablement défectueux peut être égal audit rang de ladite matrice de cohérence ($C_1,C_2$) moins une unité ou bien audit rang de ladite matrice de cohérence ($C_1,C_2$).

13. Procédé de surveillance selon l'une quelconque des revendications 1 à 12, **caractérisé en ce que**, lors de ladite étape d'analyse (30), ledit au moins un capteur vibratoire (1) probablement défectueux est celui dont la coordonnée d'un vecteur propre dont la valeur propre n'est pas nulle ou sensiblement nulle est la plus faible en valeur absolue.

14. Procédé de surveillance selon l'une quelconque des revendications 1 à 13, **caractérisé en ce que**, lors de ladite étape de diagnostic (40), un capteur vibratoire (1) est considéré comme défectueux si le rapport entre le nombre $L$ de groupes ($G_1,G_2$) dans lequel ledit capteur vibratoire (1) est probablement défectueux et le nombre total $K$ de groupes ($G_1,G_2$) auxquels ledit capteur vibratoire (1) appartient est supérieur ou égal à un troisième seuil ρ prédéterminé.

15. Procédé de surveillance selon l'une quelconque des revendications 1 à 14,
   **caractérisé en ce que**, lors de ladite étape de diagnostic (40), on affiche chaque capteur vibratoire (1) considéré comme défectueux.

16. Procédé de surveillance selon l'une quelconque des revendications 1 à 15,
   **caractérisé en ce que** ledit système (5) est un aéronef à voilure tournante.

## Patentansprüche

1. Verfahren zum Überwachen von in einem System (5) installierten Schwingungssensoren (1), wobei das System (5) mindestens zwei Schwingungssensoren (1) aufweist,
   in dessen Verlauf:

   - während eines vorläufigen Schritts (10)

     ∘ mindestens eine Gruppe ($G_1$, $G_2$) definiert wird, die mindestens zwei Schwingungssensoren (1) aufweist, die ein Schwingungssignal ($S_1$, $S_2$) bei einer Eigenfrequenz ($f_1$, $f_2$) empfangen, wobei das Schwingungssignal ($S_1$, $S_2$) äquivalenten Fortpflanzungspfaden bis zu den Schwingungssensoren (1) hin folgt,

   - während eines Erfassungsschritts (20)

     ∘ eine synchrone Erfassung des Schwingungssignals ($S_1$, $S_2$) durchgeführt wird, welches von jedem Schwingungssensor (1) der Gruppe ($G_1$, $G_2$) empfangen wurde,
     ∘ ausgehend von der synchronen Erfassung ein Spektrum des von jedem Schwingungssensor (1) empfangenen Schwingungssignals ($S_1$, $S_2$) bestimmt wird,
     ∘ für jedes Paar von Schwingungssensoren (1) der Gruppe ($G_1$, $G_2$) ein Koeffizient der spektralen Kohärenz der Spektren des Schwingungssignals ($S_1$, $S_2$), das von dem Paar der Schwingungssensoren (1) empfangen wurde, berechnet wird, und
     ∘ eine Kohärenzmatrix ($C_1$, $C_2$) der Gruppe ($G_1$, $G_2$) konstruiert wird,

   - während eines Analyseschritts (30)

     ∘ die Eigenwerte ($\lambda n_1$, $\lambda n_2$) und die Eigenvektoren ($Vn_1$, $Vn_2$) bestimmt werden, die mit der Kohärenzmatrix ($C_1$, $C_2$) der Gruppe ($G_1$, $G_2$) verknüpft sind,
     ∘ die Eigenwerte ($\lambda n_1$, $\lambda n_2$) in aufsteigender Reihenfolge ihrer Absolutwerte sortiert werden,
     ∘ der Rang der Kohärenzmatrix ($C_1$, $C_2$) berechnet wird,
     ∘ die Anzahl der Schwingungssensoren (1), die wahrscheinlich defekt sind, für jede Gruppe ($G_1$, $G_2$) berechnet wird, und
     ∘ die wahrscheinlich defekten Schwingungssensoren (1) der Gruppe ($G_1$, $G_2$) identifiziert werden,

   - während eines Diagnoseschritts (40)

     ∘ die Analysen einer jeden Gruppe ($G_1$, $G_2$) zusammengestellt werden, um die Schwingungssensoren (1) zu bestätigen, die für das System (5) als defekt betrachtet werden.

2. Überwachungsverfahren nach Anspruch 1,
   **dadurch gekennzeichnet, dass** jede synchrone Erfassung mindestens zwei synchrone Messungen der Schwingungssignale ($S_1$, $S_2$) umfasst, die von jedem Schwingungssensor (1) der Gruppe ($G_1$, $G_2$) empfangen wurden.

3. Überwachungsverfahren nach Anspruch 2,
   **dadurch gekennzeichnet, dass** für jede Erfassung die synchronen Messungen des Schwingungssignals ($S_1$, $S_2$) während eines ersten Zeitintervalls $T_{acq}$, das größer ist als ein erster vorbestimmter Grenzwert, ausgeführt werden, wobei jede erste Messung zu Beginn des ersten Zeitintervalls $T_{acq}$ ausgeführt wird, und jede letzte Messung am Ende des ersten Zeitintervalls $T_{acq}$ ausgeführt wird.

**4.** Überwachungsverfahren nach einem der Ansprüche 2 bis 3,
**dadurch gekennzeichnet, dass** ein zweites Zeitintervall $T_{mes}$ zwei aufeinanderfolgende synchrone Messungen des Schwingungssignals ($S_1$, $S_2$) trennt, wobei das zweite Zeitintervall $T_{mes}$ kleiner ist als ein zweiter vorbestimmter Grenzwert.

**5.** Überwachungsverfahren nach einem der Ansprüche 1 bis 4,
**dadurch gekennzeichnet, dass** mit jeder synchronen Messung verknüpft sind:

- das Datum der Durchführung der synchronen Messung,
- der Schwingungsmesser (1), der es erlaubt hat, die Messung durchzuführen, und
- die Gruppe ($G_1$, $G_2$) des Schwingungssensors (1), der der Eigenfrequenz ($f_1$, $f_2$) des von dem Schwingungssensor (1) empfangenen Schwingungssignals ($S_1$, $S_2$) entspricht.

**6.** Überwachungsverfahren nach Anspruch 5,
**dadurch gekennzeichnet, dass** während des Erfassungsschritts (20) jedes Paar sich zusammensetzt aus zwei Schwingungssensoren (1) der Gruppe ($G_1$, $G_2$), deren synchrone Messungen Erstellungsdaten aufweisen, deren Differenz kleiner ist als ein dritter vorbestimmter Grenzwert.

**7.** Überwachungsverfahren nach einem der Ansprüche 1 bis 6,
**dadurch gekennzeichnet, dass** der Rang der Kohärenzmatrix ($C_1$, $C_2$) gleich der Anzahl der Schwingungssensoren (1) der Gruppe ($G_1$, $G_2$) minus der Anzahl der Eigenwerte ($\lambda n_1$, $\lambda n_2$) ist, die gleich null sind.

**8.** Überwachungsverfahren nach einem der Ansprüche 1 bis 6,
**dadurch gekennzeichnet, dass** der Rang de Kohärenzmatrix ($C_1$, $C_2$) gleich der Anzahl der Schwingungssensoren (1) der Gruppe ($G_1$, $G_2$) minus der Anzahl der Eigenwerte ($\lambda n_1$, $\lambda n_2$) ist, die ungefähr gleich null sind.

**9.** Überwachungsverfahren nach Anspruch 8,
**dadurch gekennzeichnet, dass** ein Eigenwert ($\lambda n_1$, $\lambda n_2$) ungefähr null ist, wenn sein Absolutwert kleiner ist als ein erster vorbestimmter Schwellenwert.

**10.** Überwachungsverfahren nach Anspruch 8,
**dadurch gekennzeichnet, dass** ein Eigenwert ($\lambda n_1$, $\lambda n_2$) ungefähr null ist, wenn die aufaddiert Summe seines Absolutwertes und von Absolutwerten der vorhergehenden Eigenwerte ($\lambda n_1$, $\lambda n_2$) gemäß einer aufsteigenden Reihenfolge ihrer Absolutwerte kleiner ist als ein zweiter vorbestimmter Schwellenwert $\beta$.

**11.** Überwachungsverfahren nach einem der Ansprüche 1 bis 10,
**dadurch gekennzeichnet, dass** während des Analyseschritts (30), wenn der Rang der Kohärenzmatrix ($C_1$, $C_2$) kleiner ist als die Gesamtzahl der Schwingungssensoren (1) der Gruppe ($G_1$, $G_2$), die Anzahl der Schwingungssensoren (1) der Gruppe ($G_1$, $G_2$), die wahrscheinlich defekt sind, gleich dem Rang der Kohärenzmatrix ($C_1$, $C_2$) minus einer Einheit ist.

**12.** Überwachungsverfahren nach einem der Ansprüche 1 bis 10,
**dadurch gekennzeichnet, dass** während des Analyseschritts (30), wenn der Rang der Kohärenzmatrix ($C_1$, $C_2$) gleich der Gesamtzahl der Schwingungssensoren (1) der Gruppe ($G_1$, $G_2$) ist, die Anzahl der wahrscheinlich defekten Schwingungssensoren (1) der Gruppe ($G_1$, $G_2$) gleich dem Rang der Kohärenzmatrix ($C_1$, $C_2$) minus einer Einheit oder gleich dem Rang der Kohärenzmatrix ($C_1$, $C_2$) sein kann.

**13.** Überwachungsverfahren nach einem der Ansprüche 1 bis 12,
**dadurch gekennzeichnet, dass** während des Analyseschritts (30) der mindestens eine wahrscheinlich defekte Schwingungssensor (1) derjenige ist, dessen Koordinate eines Eigenvektors, dessen Eigenwert ungleich null ist oder im Wesentlichen null ist, in ihrem Absolutwert die kleinste ist.

**14.** Überwachungsverfahren nach einem der Ansprüche 1 bis 13,
**dadurch gekennzeichnet, dass** während des Diagnoseschritts (40) ein Schwingungssensor (1) als defekt betrachtet wird, wenn das Verhältnis zwischen der Anzahl $L$ von Gruppen ($G_1$, $G_2$), in der der Schwingungssensor (1) wahrscheinlich defekt ist, und der Gesamtanzahl $K$ von Gruppen ($G_1$, $G_2$), denen der Schwingungssensor (1) angehört, größer oder gleich einem dritten vorbestimmten Schwellenwert $\rho$ ist.

**15.** Überwachungsverfahren nach einem der Ansprüche 1 bis 14,
**dadurch gekennzeichnet, dass** während des Diagnoseschritts (40) jeder Schwingungssensor (1), der als defekt angesehen wird, angezeigt wird.

**16.** Überwachungsverfahren nach einem der Ansprüche 1 bis 15,
**dadurch gekennzeichnet, dass** das System (5) ein Drehflügelluftfahrzeug ist.

**Claims**

**1.** A method for monitoring vibratory sensors (1) installed in a system (5), said system (5) comprising at least two vibratory sensors (1),
during which:

> - in a preliminary step (10),

>> ▪ at least one group ($G_1$, $G_2$) is defined, comprising at least two vibratory sensors (1) which receive a vibratory signal ($S_1$, $S_2$) at a characteristic frequency ($f_1$, $f_2$), said vibratory signal ($S_1$, $S_2$) following equivalent propagation paths as far as said vibratory sensors (1),

> - in an acquisition step (20),

>> ▪ synchronous acquisition of said vibratory signal ($S_1$, $S_2$) received by each vibratory sensor (1) of said group ($G_1$, $G_2$) is carried out,
>> ▪ from said synchronous acquisition there is determined a spectrum of the vibratory signal ($S_1$, $S_2$) received by each vibratory sensor (1),
>> ▪ for each pair of vibratory sensors (1) of said group ($G_1$, $G_2$) there is calculated a spectral coherence coefficient of said spectra of the vibratory signal ($S_1$, $S_2$) which is received by said pair of vibratory sensors (1), and
>> ▪ a coherence matrix ($C_1$, $C_2$) of said group ($G_1$, $G_2$) is constructed,

> - in an analysis step (30),

>> ▪ the eigenvalues ($\lambda n_1$, $\lambda n_2$) and the associated eigenvectors ($Vn_1$, $Vn_2$) of said coherence matrix ($C_1$, $C_2$) of said group ($G_1$, $G_2$) are determined,
>> ▪ said eigenvalues ($\lambda n_1$, $\lambda n_2$) are sorted by ascending order of their absolute values,
>> ▪ the rank of said coherence matrix ($C_1$, $C_2$) is calculated,
>> ▪ the number of probably defective vibratory sensors (1) is calculated for each group ($G_1$, $G_2$), and
>> ▪ said probably defective vibratory sensors (1) of said group ($G_1$, $G_2$) are identified,

> - in a diagnostic step (40),

>> ▪ the analyses of each group ($G_1$, $G_2$) are compiled in order to confirm said vibratory sensors (1) which are considered to be defective for said system (5).

**2.** A monitoring method according to Claim 1,
**characterised in that** each synchronous acquisition comprises at least two synchronous measurements of said vibratory signals ($S_1$, $S_2$) received by each vibratory sensor (1) of said group ($G_1$, $G_2$).

**3.** A monitoring method according to Claim 2,
**characterised in that**, for each acquisition, said synchronous measurements of said vibratory signal ($S_1$, $S_2$) are effected during a first time interval $T_{acq}$ which is greater than a first predetermined limit value, each first measurement being effected at the start of said first time interval $T_{acq}$ and each last measurement being effected at the end of said first time interval $T_{acq}$.

**4.** A monitoring method according to any one of Claims 2 to 3,
**characterised in that** a second time interval $T_{mes}$ separates two successive synchronous measurements of said vibratory signal ($S_1$, $S_2$), said second time interval $T_{mes}$ being less than a second determined limit value.

5. A monitoring method according to any one of Claims 1 to 4,
   **characterised in that** there are associated with each synchronous measurement:

   - the date on which said synchronous measurement is carried out,
   - said vibratory sensor (1) having made it possible to effect said measurement, and
   - said group ($G_1$, $G_2$) of said vibratory sensor (1) corresponding to said characteristic frequency ($f_1$, $f_2$) of said vibratory signal ($S_1$, $S_2$) received by said vibratory sensor (1).

6. A monitoring method according to Claim 5,
   **characterised in that**, in said acquisition step (20), each pair is composed of two vibratory sensors (1) of said group ($G_1$, $G_2$), said synchronous measurements of which have measurement dates which have a difference which is less than a third predetermine limit value.

7. A monitoring method according to any one of Claims 1 to 6,
   **characterised in that** said rank of said coherence matrix ($C_1$, $C_2$) is equal to the number of said vibratory sensors (1) of said group ($G_1$, $G_2$) minus the number of said zero eigenvalues ($\lambda n_1$, $\lambda n_2$).

8. A monitoring method according to any one of Claims 1 to 6,
   **characterised in that** said rank of said coherence matrix ($C_1$, $C_2$) is equal to the number of said vibratory sensors (1) of said group ($G_1$, $G_2$) minus the number of said substantially zero eigenvalues ($\lambda n_1$, $\lambda n_2$).

9. A monitoring method according to Claim 8,
   **characterised in that** an eigenvalue ($\lambda n_1$, $\lambda n_2$) is substantially zero if its absolute value is less than a first predetermined threshold $\alpha$.

10. A monitoring method according to Claim 8,
    **characterised in that** an eigenvalue ($\lambda n_1$, $\lambda n_2$) is substantially zero if the cumulative total of its absolute value and of the absolute values of said preceding eigenvalues ($\lambda n_1$, $\lambda n_2$) in ascending order of their absolute value is less than a second predetermined threshold $\beta$.

11. A monitoring method according to any one of Claims 1 to 10,
    **characterised in that**, in said analysis step (30), if said rank of the coherence matrix ($C_1$, $C_2$) is less than the total number of said vibratory sensors (1) of said group ($G_1$, $G_2$), the number of said vibratory sensors (1) of said probably defective group ($G_1$, $G_2$) is equal to said rank of said coherence matrix ($C_1$, $C_2$) minus one unit.

12. A monitoring method according to any one of Claims 1 to 10,
    **characterised in that**, in said analysis step (30), if said rank of the coherence matrix ($C_1$, $C_2$) is equal to the total number of said vibratory sensors (1) of said group ($G_1$, $G_2$), the number of said vibratory sensors (1) of said probably defective group ($G_1$, $G_2$) may be equal to said rank of said coherence matrix ($C_1$, $C_2$) minus one unit, or alternatively to said rank of said coherence matrix ($C_1$, $C_2$).

13. A monitoring method according to any one of Claims 1 to 12,
    **characterised in that**, in said analysis step (30), said at least one probably defective vibratory sensor (1) is the one whose coordinate of an eigenvector, the eigenvalue of which is not zero or substantially zero, is the lowest in absolute value.

14. A monitoring method according to any one of Claims 1 to 13,
    **characterised in that**, in said diagnostic step (40), a vibratory sensor (1) is considered to be defective if the ratio between the number $L$ of groups ($G_1$, $G_2$) in which said vibratory sensor (1) is probably defective and the total number $K$ of groups ($G_1$, $G_2$) to which said vibratory sensor (1) belongs is greater than or equal to a third predetermined threshold $\rho$.

15. A monitoring method according to any one of Claims 1 to 14,
    **characterised in that**, in said diagnostic step (40), each vibratory sensor (1) which is considered to be defective is displayed.

16. A monitoring method according to any one of Claims 1 to 15,
    **characterised in that** said system (5) is a rotary-wing aircraft.

# Fig.2

# Fig.1

# Fig.3

# Fig.4

EP 2 728 321 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090284263 A

**Littérature non-brevet citée dans la description**

- **G. BIENVENU.** Influence de la cohérence spatiale du bruit de fond sur la résolution de sources ponctuelles. *Colloque national sur le traitement du signal et ses applications,* 26 Avril 1977
- **FRÉDÉRIC KRATZ.** Utilisation des techniques de redondances matérielles et analytiques à la détection de pannes de capteurs - Application aux centrales nucléaires. *Thèse de doctorat,* 24 Juin 1991, http://docnum.univlorraine.fr/public/SCD_T_1991_0072_KRATZ.pdf
- **KEVIN C . DALY et al.** Generalized Likelihood Test for FDI in Redundant Sensor Configurations. *JOURNAL OF GUIDANCE, CONTROL, AND DYNAMICS,* 01 Janvier 1979, vol. 2
- **JAMES C DECKERT et al.** F-8 DFBW Sensor Failure Identification Using Analytic Redundancy. *IEEE TRANSACTIONS ON AUTOMATIC CONTROL,* 01 Octobre 1977, vol. 6
- **KRISHNA R PATTIPATI et al.** *A design methodology for robust failure détection and isolation,* 01 Juin 1984
- **VICTOR GIRONDIN et al.** Vibration-Based Fault Detection of Accelerometers in Helicopters. *8TH IFAC SYMPOSIUM ON FAULT DETECTION, SUPERVISION AND SAFETY OF TECHNICAL PROCESSES,* 29 Août 2012